# EUROPÄISCHE PATENTANMELDUNG

(11) **EP 1 380 745 A2**
(43) Veröffentlichungstag der Anmeldung: **14.01.2004**
(21) Anmeldenummer: 03012573.6
(22) Anmeldetag: 03.06.2003
(51) Int. Cl.: F02D 41/38, F02D 41/30, F02D 41/34, F02D 41/14, F02D 41/36

(54) **Verfahren zum Betrieb eines Benzinmotors mit Direkteinspritzung**

(30) Priorität: 09.07.2002 DE 10230913
(71) Anmelder: Bayerische Motoren Werke Aktiengesellschaft, 80809 München (DE)
(72) Erfinder: Giraud, Pierre, 81667 München (DE); Flick, Werner, 80686 München (DE)

(57) **Zusammenfassung**

Bei einem Verfahren zum Betrieb eines Benzinmotors mit Direkteinspritzung, bei dem in Abhängigkeit von Betriebsparametern eine Umschaltung zwischen homogener Ladung und Schichtladung erfolgt, werden zur Aufrechterhaltung eines zeitlich homogenen Drehmomentverlaufs während der Umschaltung zwischen homogener Ladung und Schichtladung für eine Übergangszeit ausgewählte Zylinder oder Zylindergruppen des Motors in voneinander verschiedenen Betriebsarten, die sich in bezug auf ihren λ-Wert unterscheiden, betrieben. Während der gesamten Umschaltung kann ein hoher Wirkungsgrad gewährleistet werden, da die Bildung einer Drehmomentreserve vermieden wird. Durch eine entsprechende Ansteuerung kann stets mit einem günstigen Zündwinkel gefahren werden. Außerdem läßt sich eine hohe Verbrennungsqualität verwirklichen.

## Beschreibung

Die Erfindung bezieht sich auf ein Verfahren zum Betrieb eines Benzinmotors mit Direkteinspritzung, bei dem in Abhängigkeit von Betriebsparametem eine Umschaltung zwischen homogener Ladung und Schichtladung erfolgt. Derartige Motoren werden beispielsweise in Personenkraftwagen eingesetzt.

Benzinmotoren mit Direkteinspritzung ermöglichen im Vergleich zu Motoren mit Saugrohreinspritzung eine merkliche Senkung des Kraftstoffverbrauchs, da der Motor bei Teillast im ungedrosselten Betrieb durch Schichtung des Luft-Kraftstoffgemisches sehr mager betrieben werden kann. Dies bedeutet eine maximale Füllung des Brennraums mit Frischluft und führt zur Ausbildung einer kleinen Zone mit einem Gemisch, das trotz des bezogen auf die gesamte Zylinderfüllung insgesamt sehr mageren λ-Wertes (Luft/Kraftstoffverhältnis) zündbar ist. Die Schichtung der Ladung läßt sich insbesondere durch eine späte Einspritzung während des Verdichtungstakts und eine über den gesamten Arbeitsbereich wirksame Steuerung der Ladungsbewegung im Zylinder erreichen. Übliche konstruktive Maßnahmen zur Bewirkung einer Ladungsschichtung sind beispielsweise der Einsatz einer variablen Ventilsteuerung für die Ein- und Auslaßventile und/oder die Verwendung von speziell geformten Einlaßkanälen, mit denen Drall- oder Tumblebewegungen im Zylinder erzeugt werden können. Bei Vollast wird hingegen eine homogene Ladung bevorzugt.

Dies hat zufolge, daß in Abhängigkeit des Motorbetriebs zwischen einem Betrieb mit homogener Ladung und einem Betrieb mit Schichtladung hin und her geschaltet werden muß. Dabei ist zu berücksichtigen, daß diese Betriebsweisen stark unterschiedliche Einspritz- und Verbrennungsstrategien erfordern.

Ein Grund hierfür liegt darin, daß zwischen einem auf die gesamte Zylinderfüllung bezogenen λ-Wert einer homogen-mageren Ladung und dem λ-Wert einer Schichtladung je nach Kraftstoffzusammensetzung eine λ-Lücke besteht, welche sowohl für eine homogene Ladung als auch für eine Schichtladung ungünstig ist.

Zudem wird im Schichtladungsbetrieb in der Regel eine späte Einspritzung im Verdichtungstakt erfolgen. Desweiteren wird der Motor nicht oder allenfalls wenig gedrosselt. Bei homogener Ladung wird hingegen eine frühe Einspritzung während des Ansaugtaktes sowie eine Drosselung der Luftzufuhr vorgenommen.

Soll nun die Betriebsweise des Motors beispielsweise bei gleicher Motorleistung von Schichtladung auf homogene Ladung umgeschaltet werden, so ist einerseits die angesaugte Luftmasse zu verringern, andererseits die eingespritzte Kraftstoffmenge zu erhöhen, um die ansteigenden Strömungsverfuste zu kompensieren, welche durch die Drosselung der Luftzufuhr verursacht werden. Es ist unmittelbar ersichtlich, daß hierbei die Gefahr besteht, durch die damit verbundenen Maßnahmen das vom Motor erzeugte Drehmoment derart zu beeinflussen, daß die Umschaltung durch einen Fahrer wahrgenommen wird.

Eine wesentliche Zielsetzung für den Betrieb eines Benzinmotors mit Direkteinspritzung besteht folglich darin, die Umschaltung so zu realisieren, daß während der Umschaltung zwischen homogener Ladung und Schichtladung ein zeitlich homogener Drehmomentverlauf aufrecht erhalten wird, also bei konstantem Drehmoment ein Übergang ohne eine für einen Fahrer merkliche Drehmomentänderung erfolgt oder aber bei einem sich verändernden Drehmoment keine fühlbare Unstetigkeit im zeitlichen Drehmomentverlauf auftritt.

Ein Verfahren der eingangs genannten Art ist beispielsweise aus der DE 198 10 466 A1 bekannt. Allerdings beschränkt sich die Lehre der DE 198 10 466 A1 auf ein Verfahren, bei dem durch Verwendung einer variablen Ventilsteuerung die Strömungsverhältnisse im Motor wahlweise eine Ladungsbewegung für eine homogene Ladung und alternativ für eine Schichtladung ermöglichen. Durch entsprechende Kennfelder, in welchen für jede Betriebsweise Steuerzeiten abgelegt sind, werden die Ein- und Auslaßventile je nach der gewünschten Betriebsweise betätigt.

Die Umschaltung zwischen einer homogenen Ladung und einer Schichtladung erfolgt dabei sehr abrupt, indem von einem Arbeitspiel zum nächsten schlagartig von einem Kennfeld auf das andere Kennfeld umgeschaltet wird. In der DE 198 10 466 A1 wird in diesem Zusammenhang ausgeführt, daß sich hierdurch gegenüber herkömmlichen Motoren, welche mit einer Drosselklappe arbeiteten, Übergangsfunktionen für die Einspritzzeit und den Zündzeitpunkt vermeiden ließen, die aufgrund der Saugrohrdynamik erforderlich seien.

Die Erfindung beabsichtigt, den Vorgang der Umschaltung zwischen einer homogenen Ladung und einer Schichtladung weiter zu verbessern.

Es hat sich nämlich in der Praxis herausgestellt, daß bisweilen Fälle auftreten, in denen die klassische Umschaltung ungünstig ist, weil sich keine ausreichend hohe Drehmomentreserve bilden läßt, um einen fühlbaren Ruck zu vermeiden. Dieses Problem tritt beispielsweise bei hohen Drehzahlen auf, in denen die Zeit zu gering ist, um genug Kraftstoff für eine ausreichend hohe Momentenreserve einzuspritzen.

Zwar bestünde die Möglichkeit, eine momentenneutrale Umschaltung durch Aufbau einer ausreichenden Drehmomentreserve zu realisieren, indem zunächst die Luftmasse und Kraftstoffmasse erhöht werden. Um eine Erhöhung des Drehmoments zu vermeiden, wird eine Zündwinkelverschlechterung vorgenommen. Soll beispielsweise von homogener Ladung auf Schichtladung umgeschaltet werden, werden die Luftmasse und Kraftstoffmasse solange erhöht, bis genügende Luftmasse für einen Schichtbetrieb vorhanden ist. Zu diesem Zeitpunkt erfolgt dann eine schlagartige Umschaltung der Einspritzung und der Zündung, so daß im Schichtbetrieb weiter gefahren wird. Jedoch sinkt so aufgrund des anfänglichen Kraftstoffmehrbedarfs und der Zündwinkelverschiechterung der Wirkungsgrad des Motors.

Die Erfindung schafft hiergegen Abhilfe, indem zur Aufrechterhaltung eines zeitlich homogenen Drehmomentverlaufs während der Umschaltung zwischen homogener Ladung und Schichtladung für eine Übergangszeit ausgewählte Zylinder oder Zylindergruppen des Motors in voneinander verschiedenen Betriebsarten, die sich in bezug auf ihren λ-Wert (Luft/kraftstoffverhältnis) unterscheiden, betrieben werden.

Auf diese Weise läßt sich der Motor sukzessive von der einen Betriebsweise auf die andere Betriebsweise umschalten. Die Kraftstoffmassenunterschiede, welche aus der Umschaltung resultieren, bleiben gering, womit deren Einstellung vor allem auch bei hohen Drehzahlen noch beherrschbar ist und ein kurzzeitiger Drehmomentmangel oder -überschuß vermieden wird.

Damit bleibt die Laufruhe des Motors über die Umschaltung hinweg erhalten, so daß der Fahrer von der Umschaltung in der Regel nichts spürt.

Die Erfindung erweitert somit den Einsatzbereich einer Umschaltung zwischen einer homogenen Ladung und einer Schichtladung bei einem Benzinmotor mit Direkteinspritzung.

Ermöglicht werden hierdurch sparsame, reversible Umschaltungen, die schnell oder langsam durchgeführt werden können.

Vorteil ist das Fehlen einer Drehmomentreserve und der entsprechenden Zündwinkelverschlechterung. Durch die Umschaltungsansteuerung kann stets mit einem optimalen Zündwinkel gefahren werden. Zudem kann nahezu während der gesamten Umschaltung eine hohe Verbrennungsqualität gewährleistet werden. Daraus resultiert ein Verbrauchsvorteil.

Weitere, vorteilhafte Ausgestaltungen der Erfindung sind in den Patentansprüchen angegeben.

Gemäß einer bevorzugten Ausführungsform sind für die Übergangszeit wenigstens die folgenden, voneinander verschiedene Betriebsarten vorgesehen, nämlich eine Betriebsart mit einer homogenen Ladung und eine Betriebsart mit Schichtladung. Damit können die Zylinder eines Motors einzeln oder in Gruppen mit in ihrem λ-Wert unterschiedliche Betriebsarten betrieben werden. Die Anzahl der während der Übergangszeit umzuschaltenden Zylinder kann sich dabei drehzahlabhängig an dem jeweiligen Kraftstoffmehr- oder -minderbedarf orientieren.

Die sukzessive Umschaltung während der Übergangszeit erfolgt in mehreren, vorzugsweise jedoch in lediglich zwei Schritten.

In einer weiteren Ausgestaltung der Erfindung ist als zusätzliche Betriebsart für die Übergangszeit eine solche mit einer homogen-mageren Ladung vorgesehen, bei der der λ-Wert deutlich vom stöchiometrischen Verhältnis abweicht.

Gemäß einer weiteren, vorteilhaften Ausgestaltung kann als zusätzliche Betriebsart während der Übergangszeit auch eine temporäre Zylinderabschattung vorgesehen sein.

Die Wahlmöglichkeit unter einer größeren Zahl von Betriebsarten erlaubt eine sehr flexible Handhabung der Umschaltung insbesondere auch unter Berücksichtigung des λ-Gesamtwerts des Motors.

Bei der Umschaltung von homogener Ladung auf Schichtladung kann beispielsweise in der folgenden Art und Weise vorgegangen werden: während der Übergangszeit wird eine plötzliche Änderung der Kraftstoffzufuhr derart vorgenommen, daß ein erster Zylinder bzw. eine erste Zylindergruppe mit homogener oder homogen-magerer Ladung betrieben wird und der bzw. die verbleibenden Zylinder mit Schichtladung betrieben werden. Durch die zunächst lediglich teilweise Umschaltung bleibt die Änderung der Kraftstoffzufuhr verhältnismäßig gering, so daß ein homogener Drehmomentverlauf während einer Umschaltung über das gesamte Drehzahlspektrum des Motors gewährleistet werden kann. Unter einer Änderung der Kraftstoffzufuhr wird hier sowohl eine Änderung der Gesamtkraftstoffmenge als auch eine Änderung der Verteilung derselben auf die einzelnen Zylinder verstanden.

Durch eine weitere, plötzliche Änderung der Kraftstoffzufuhr können anschließend die zunächst noch mit homogener Ladung betriebenen Zylinder auf Schichtladung umgeschaltet werden. Dies kann in einem oder auch in mehreren Schritten erfolgen.

Weiterhin ist es möglich, bei einer Umschaltung von homogener Ladung auf Schichtladung während der Übergangszeit eine plötzliche Änderung der Kraftstoffzufuhr derart vorzunehmen, daß ein erster Zylinder bzw. eine erste Zylindergruppe zunächst mit homogener Ladung weiterbetrieben wird, der λ-Wert jedoch in Richtung eines fetteren Gemischs verändert wird, und einen oder alle der verbleibenden Zylinder temporär abzuschalten. Auch so läßt sich ein im wesentlichen stetiger Drehmomentverlauf für die Umschaltung gewährleisten.

Vorzugsweise erfolgt in diesem Zusammenhang eine weitere plötzliche Änderung der Kraftstoffzufuhr derart, daß die temporär abgeschalteten Zylinder auf Schichtladung umgeschaltet werden.

Zudem kann gemäß einer weiteren, vorteilhaften Ausgestaltung des Verfahrens die Umschaltung auf Schichtladung für die zunächst mit homogener Ladung weiterbetriebenen und die temporär abgeschalteten Zylinder gleichzeitig erfolgen, womit vor allem der Steuerungsaufwand verhältnismäßig gering bleiben.

Durch die Kombination unterschiedlicher Betriebsarten läßt sich die Umschaltung gegebenenfalls auch in Abhängigkeit von Betriebparametern des Motors sehr flexibel an die jeweilige Betriebssituation anpassen. Möglich ist beispielsweise auch ein mehrstufiger Umschaltvorgang, bei dem drei oder alle vier Betriebsarten für einzelne Zylinder oder Zylindergruppen zum Einsatz kommen.

Bevorzugt wird die plötzliche Änderung der Kraftstoffzufuhr mit einer langsameren Veränderung der Luftzufuhr verbunden. Dies kann beispielsweise mit Hilfe einer variablen Ventilsteuerung erfolgen. Bei Vorhandensein einer Drosselklappe wird man dies jedoch vorwiegend durch eine Veränderung der Öffnungsbewegung der Drosselklappe realisieren.

Nachfolgend wird die Erfindung nun anhand von in der Zeichnung dargestellten Ausführungsbeispielen näher erläutert. Die Zeichnung zeigt in:
- Figur 1: eine schematische Darstellung eines Ausführungsbeispiels für einen Benzinmotor mit Direkteinspritzung, der nach dem erfindungsgemäßen Verfahren arbeitet,
- Figur 2: ein λ/λ-Diagramm für zwei Zylindergruppen zur Veranschaulichung der λ-Werte für eine Umschaltung von homogener Ladung auf Schichtladung bei dem in Figur 1 dargestellten Motor,
- Figur 3: ein weiteres λ/λ-Diagramm zur Veranschaulichung der λ -Werte für eine Umschaltung von homogener Ladung auf Schichtladung bei dem in Figur 1 dargestellten Motor, bei der ein Zylinder abgeschaltet wird, und in
- Figur 4: ein weiteres λ/λ-Diagramm zur Veranschaulichung der λ -Werte für eine Umschaltung von homogener Ladung auf Schichtladung bei dem in Figur 1 dargestellten Motor, bei der verschiedene Betriebsarten mit unterschiedlichen λ -Werten durchfahren werden.

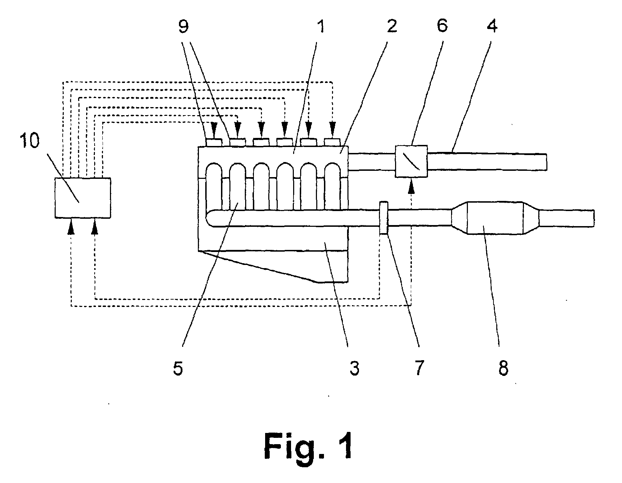

Das im folgenden anhand den Figuren 1 bis 4 erläuterte, bevorzugte Ausführungsbeispiel bezieht sich auf einen Benzinmotor 1 mit Direkteinspritzung, der vorzugsweise nach dem Otto-Prinzip arbeitet. Dieser Motor 1 wird in Abhängigkeit von Betriebsparametern entweder mit einer homogenen Ladung oder mit einer Schichtladung betrieben. Figur 1 zeigt in schematischer Darstellung den Motorblock 2 und den Zylinderkopf 3 des hier beispielhaft als Reihensechszylindermaschine ausgebildeten Motors 1, sowie die zugehörigen Ansaug- und Auslaßsysteme 4 und 5. Das Ansaugsystem 4 umfaßt unter anderem eine elektronisch gesteuerte Drosselklappe 6. Im Auslaßsystem 5 ist eine Lambdasonde 7 sowie ein Speicherkatalysator 8 vorgesehen, der im Hinblick auf die Schichtladung als NOₓ-Speicherkatalysator ausgebildet ist und im Magerbetrieb NOₓ speichert. Die Regeneration erfolgt bei fetten Betriebsbedingungen. Denkbar ist auch der Einsatz einer hier nicht näher dargestellten Abgasrückführung zur Verminderung des NOₓ-Gehalts im Magerbetrieb.

Weiterhin zeigt Figur 1 für jeden Zylinder ein Direkteinspritzventil 9. Diese Direkteinspritzventile 9 werden jeweils individuell über eine Motorsteuerungseinrichtung 10 angesteuert. Dabei läßt sich für jedes Ventil 9 die Einspritzzeit und die Einspritzdauer sowie gegebenenfalls auch die Einspritzmenge bzw. der Einspritzdruck separat einstellen, um den Motor 1 wahlweise entweder mit einer homogenen Ladung oder mit einer Schichtladung zu betreiben. Die Motorsteuerungseinrichtung 10 paßt außerdem die Zündung an die jeweilige Betriebsweise an. Bei Verwendung einer variablen Ventilsteuerung erfolgt die Bestimmung der Ein- und Auslaßzeiten ebenfalls in der Motorsteuerungseinrichtung 10. Jedoch kommt bei dem hier dargestellten Ausführungsbeispiel eine elektronische Drosselklappe 6 zum Einsatz, über die bei einer homogenen Ladung die Füllung der Zylinder kontrolliert wird. Im Schichtladungsbetrieb wird die Drosselklappe 6 weitestgehend oder auch vollständig geöffnet, um eine maximale Frischluftzufuhr zu gewährleisten.

Die Umschaltung zwischen einem Betrieb mit homogener Ladung und einem Betrieb mit Schichtladung erfolgt während des Fahrbetriebs. Bei einer hohen Last wird bevorzugt mit homogener Ladung gefahren. Hingegen kommt im Teillastbereich vorwiegend Schichtladung zum Einsatz. Im Leerlaufbetrieb kann es im Hinblick auf die Abgastemperaturen wiederum sinnvoll sein, mit homogener Ladung zu fahren, damit der Katalysator auf Arbeitstemperatur bleibt. Um beim Umschalten stets einen weichen Übergang zu erzielen, wird angestrebt, den Drehmomentverlauf während der Umschaltung zeitlich möglichst stetig zu gestalten, um eine hohe Laufruhe des Motors 1 zu gewährleisten. Zur Vermeidung von Drehmomentschwankungen infolge des sich bei einer Umschaltung verändernden Kraftstoffbedarfs - dies resultiert aus der sich verändernden Art und Weise der Verbrennung sowie dem veränderten Strömungsverhalten im Ansaugund Auslaßsystem - können beim Umschalten zwischen homogener Ladung und Schichtladung für eine Übergangszeit ausgewählte Zylinder oder Zylindergruppen des Motors 1 in voneinander in bezug auf ihren λ-Wert unterschiedlichen Betriebsarten betrieben werden.

Für die Übergangszeit stehen dabei die folgenden Betriebsarten zur Verfügung:
- homogene Ladung; λ liegt im stöchiometrischen Bereich,
- homogen-magere Ladung; λ ist größer als 1,
- Schichtladung; λ liegt im Schichtladungsbereich,
- temporäre Zylinderabschaltung.

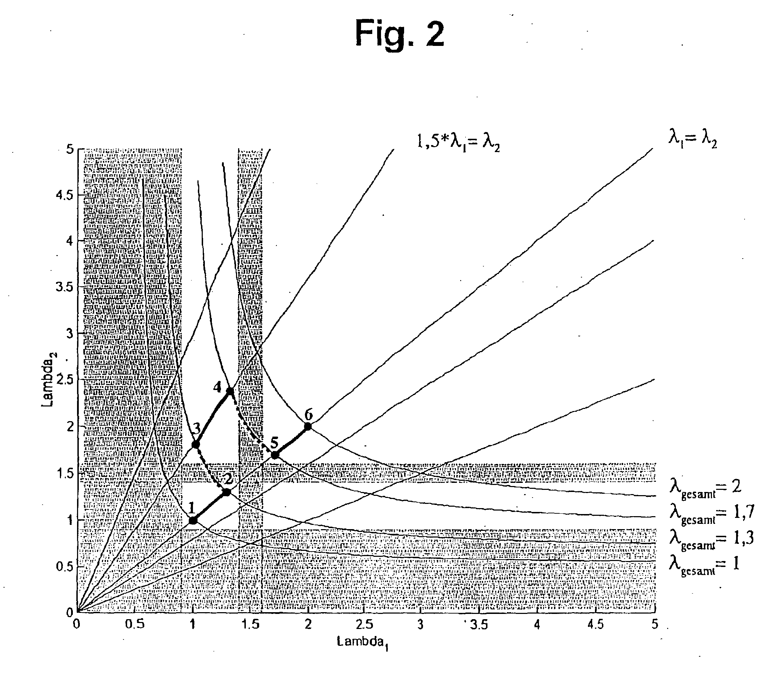

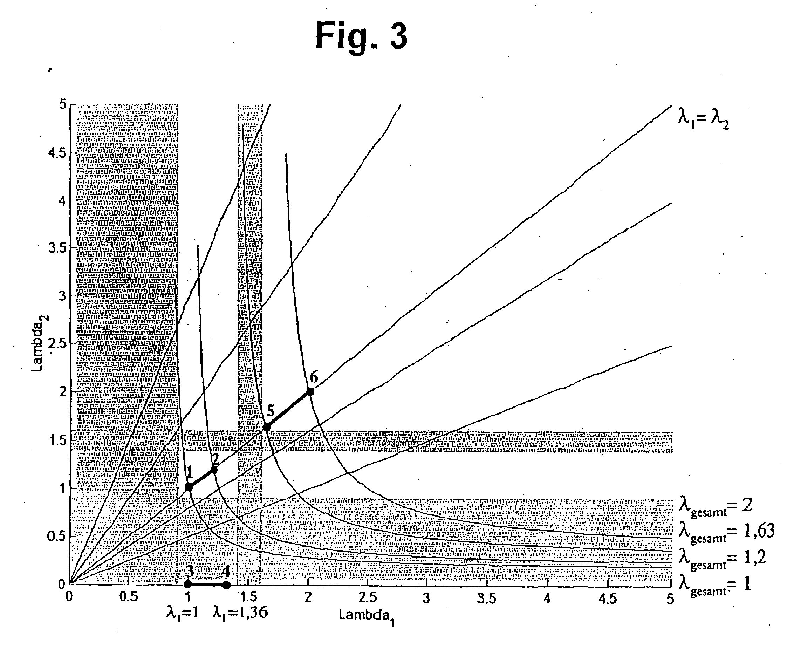

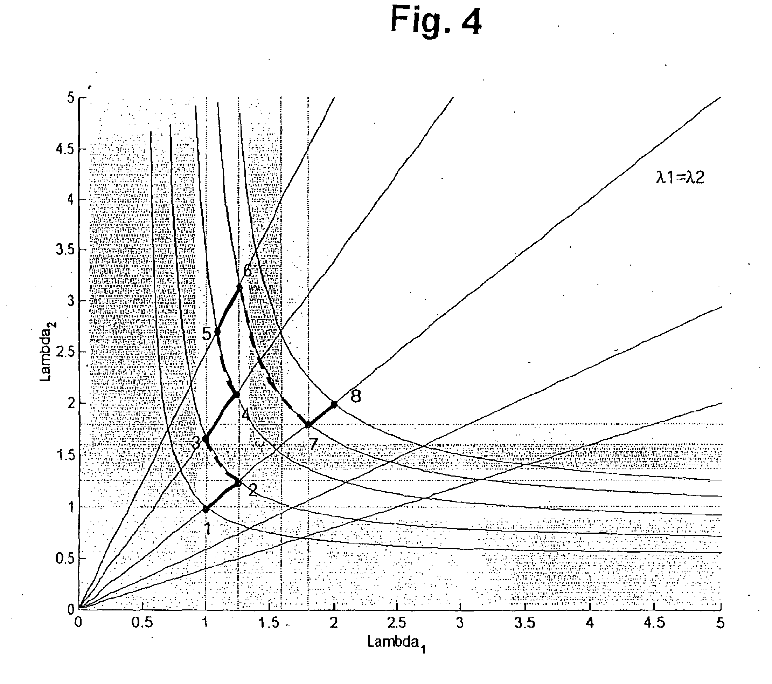

Die λ-Werte sind hierbei jeweils auf die Zylinderfüllung bezogen. Im Falle der Schichtladung schwanken die lokalen Werte innerhalb des Zylinders stark, da ein zündfähiges Gemisch lediglich im Bereich der Zündkerze erzeugt wird. Die in den Figuren dargestellten λ-Grenzen repräsentieren lediglich Beispielswerte. Sie sind vom Brennverfahren und vom Motor abhängig. So liegt in den Figuren 2 und 3 λ-Grenze für Schichtladung bei etwa 1,55, in Figur 4 hingegen etwa bei 1,8.

Figur 2 zeigt beispielhaft eine Möglichkeit, die Umschaltung von homogener Ladung zu Schichtladung vorzunehmen. In diesem Fall sind die Zylinder des Motors 1 in zwei Gruppen zu je drei Zylindern unterteilt, wobei in Figur 2 die λ-Werte für die beiden Gruppen mit dem Index 1 und dem Index 2 bezeichnet sind. Anhand der dick eingezeichneten Linien sowie der hervorgehobenen Punkte 1 bis 6 soll nun eine momentenneutrale Umschaltung von homogener Ladung zu Schichtladung näher erläutert werden. Dabei sind λ-Bereiche mit einem schlechten Zündverhalten oder sonstigen ungünstigen Motorbetriebszuständen zu vermeiden. Diese ungünstigen Bereiche sind in dem λ/λ-Diagramm von Figur 2 sowie auch in den Figuren 3 und 4 dunkel hervorgehoben.

Punkt 1 in dem λ/λ-Diagramm repräsentiert den Ausgangszustand mit homogener Ladung im stöchiometrischen Bereich (λ etwa = 1). Zum Zweck der Umschaltung wird die Drosselklappe 6 langsam geöffnet, so daß Punkt 2 im homogen-mageren Bereich erreicht wird. Zu diesem Zeitpunkt arbeiten alle Zylinder noch nach der gleichen Betriebsart. Bei Erreichen von Punkt 2 kann bei Bedarf die Öffnungsbewegung der Drosselklappe 6 vermindert oder angehalten werden. Gleichzeitig erfolgt, gesteuert durch die Motorsteuerungseinrichtung 10, eine plötzliche Änderung der Kraftstoffzufuhr in den Zylindergruppen, sowohl in bezug auf die Menge als auch auf die Verteilung, und damit verbunden eine unterschiedlichen Betriebsart. Während in der ersten Zylindergruppe mit drei Zylindern weiterhin mit homogener, jedoch nunmehr fetterer Ladung weitergefahren wird, wird in der zweiten Zylindergruppe auf Schichtladung umgestellt und damit Punkt 3 erreicht. Im weiteren Verlauf in Richtung auf Punkt 4 arbeiten die beiden Zylindergruppen nach unterschiedlichen Betriebsarten und mit unterschiedlichen λ-Werten. Dabei wird die Drosselklappe 6 weiter geöffnet. Durch einen weiteren Sprung in der Kraftstoffzufuhrwerden die verbleibenden Zylinder mit homogener Ladung schlagartig auf Schichtladung umgestellt und damit Punkt 5 erreicht. Auch hier kann man bei Bedarf die Öffnungsgeschwindigkeit der Drosselklappe 6 verändern, z.B. verringern, anhalten oder progressiv gestalten. Praktisch wird man vorzugsweise so vorgehen, daß man die Drosselklappe progressiv öffnet und bei Erreichen der Umschaltbedingungen schlagartig die Einspritzung und Zündung umstellt, so daß man die Drosselklappenbewegung nicht zu unterbrechen braucht, da dies zu einer langsamen Dynamik führen würde. Von Punkt 5 erfolgt dann durch eine weitere, vorzugsweise vollständige Öffnung der Drosselklappe 6 die weitere Erhöhung des λ-Wertes, womit man zu Punkt 6 gelangt, der einen reinen Schichtladungsbetrieb repräsentiert. Die Rückkehr zu Punkt 1 kann in entsprechend umgekehrter Weise erfolgen. Die gesamte Kraftstoffmenge wird während der vorstehend erläuterten Umschaltung so angepaßt, daß ein konstantes Moment erhalten wird.

Ein zweites Umschaltungsregime ist in Figur 3 dargestellt. In diesem Fall werden die sechs Zylinder in eine Gruppe von fünf Zylindern mit dem Index 1 und eine Gruppe von einem Zylinder mit dem Index 2 aufgeteilt. Die Vorgehensweise bei einer Umschaltung von einer homogenen Ladung (Punkt 1) zu einer Schichtladung (Punkt 6) entspricht im dabei im wesentlichen der im Zusammenhang mit Figur 2 erläuterten Vorgehensweise. Jedoch erfolgt im Schaltpunkt bei dem Übergang von Punkt 2 zu Punkt 3 zunächst keine teilweise Umschaltung auf Schichtladung. Vielmehr wird allein der einzelne Zylinder temporär abgeschaltet, während die verbleibenden Zylinder in ihrem λ-Wert zurückgenommen und mit einem fetteren Gemisch weiterbetrieben werden. Am nächsten Schaltpunkt, also beim Übergang von Punkt 4 zu Punkt 5 werden schlagartig alle Zylinder, das heißt sowohl die nunmehr wieder mit homogen-magerer Ladung betriebenen fünf Zylinder sowie der abgeschaltete Zylinder mit Schichtladung betrieben. Durch eine weitergehende Öffnung der Drosselklappe 6 wird wiederum der weitgehend ungedrosselte Schichtladungszustand von Punkt 6 erreicht. Auch hier erfolgt die Rückkehr zu Punkt 1 durch eine Umkehrung der Vorgehensweise.

Figur 4 zeigt eine Variation des Umschaltvorgangs, bei dem die Brenngrenzen bei λ=1,25 und λ=1,8 liegen, womit der dazwischenliegende Bereich, der hier dunkel hervorgehoben ist, für den Betrieb nicht zur Verfügung steht. Beispielhaft ist in Figur 4 wieder die Umschaltung von homogener Ladung zu Schichtladung anhand einer dicken Linie dargestellt. Die Reihenfolge wird durch die Punkte 1 bis 8 angegeben. Im Unterschied zu den vorstehend erläuterten Umschaltregimen sind hier mehr als zwei Umschaltpunkte vorgesehen, um einen momentenneutralen Übergang in günstigen Brennbereichen zu erhalten und Wirkungsgradverschlechterungen zu vermeiden.

Figur 4 verdeutlicht die Modifizierbarkeit der Anzahl von Sprüngen in der Kraftstoffverteilung. Zudem ist es möglich, während der Umschaltung unterschiedliche Betriebsarten in nahezu beliebiger Weise zu kombinieren, Auch bei der Einteilung der Zylinder in Gruppen besteht eine hohe Wahlfreiheit, durch welche sich etwaige Drehmomentschwankungen kompensieren lassen.

In sämtlichen Fällen bleibt die Laufruhe des Motors während der Umschaltung weitestgehend unbeeinträchtigt, und zwar unabhängig davon, ob die Umschaltung schnell oder langsam durchgeführt wird. Zudem kann nahezu während der gesamten Umschaltung ein hoher Wirkungsgrad gewährleistet werden, da die Bildung einer Momentreserve vermieden wird. Durch eine entsprechende Ansteuerung kann stets mit einem optimalen Zündwinkel gefahren werden. Außerdem läßt sich eine hohe Verbrennungsqualität aufrechterhalten.

Der Motor kann bei Gesamt-λ-Werten betrieben werden, die bei rein homogenem Betrieb oder bei reinem Schichtbetrieb nicht fahrbar wären.

Bei höheren Drehzahlen, bei denen wegen der begrenzten Einspritzdauer bisher kein ausreichender Drehmomentausbau möglich war, kann nunmehr ebenfalls drehmomentneutral umgeschaltet werden, und zwar bevorzugt in Verbindung mit einer Zylinderabschaltung.

## Patentansprüche

1. Verfahren zum Betrieb eines Benzinmotors mit Direkteinspritzung, bei dem in Abhängigkeit von Betriebsparametern eine Umschaltung zwischen homogener Ladung und Schichtladung erfolgt, **dadurch gekennzeichnet, daß** zur Aufrechterhaltung eines zeitlich homogenen Drehmomentverlaufs während der Umschaltung zwischen homogener Ladung und Schichtladung für eine Übergangszeit ausgewählte Zylinder oder Zylindergruppen des Motors in voneinander verschiedenen Betriebsarten, die sich in bezug auf ihren λ-Wert (Luft/Kraftstoffverhältnis) unterscheiden, betrieben werden.

2. Verfahren nach Anspruch 1, **dadurch gekennzeichnet, daß** als voneinander verschiedene Betriebsarten für die Übergangszeit vorgesehen sind:
- homogene Ladung und/oder homogen-magere Ladung; und
- Schichtladung.

3. Verfahren nach einem der Ansprüche 1 oder 2, **dadurch gekennzeichnet, daß** als weitere Betriebsart für die Übergangszeit vorgesehen ist:
- temporäre Zylinderabschaltung.

4. Verfahren nach einem der Ansprüche 1 bis 3, **dadurch gekennzeichnet, daß** bei einer Umschaltung von homogener Ladung auf Schichtladung während der Übergangszeit eine plötzliche Änderung der Kraftstoffzufuhr derart vorgenommen wird, daß ein erster Zylinder bzw. eine erste Zylindergruppe mit homogener oder homogen-magerer Ladung betrieben wird und der bzw. die verbleibenden Zylinder mit Schichtladung betrieben werden.

5. Verfahren nach einem der Ansprüche 1 bis 4, **dadurch gekennzeichnet, daß** eine weitere plötzliche Änderung der Kraftstoffzufuhr derart vorgenommen wird, daß die zunächst noch mit homogener Ladung betriebenen Zylinder auf Schichtladung umgeschaltet werden.

6. Verfahren nach einem der Ansprüche 1 bis 5, **dadurch gekennzeichnet, daß** bei einer Umschaltung von homogener Ladung auf Schichtladung während der Übergangszeit eine plötzliche Änderung der Kraftstoffzufuhr derart vorgenommen wird, daß ein erster Zylinder bzw. eine erste Zylindergruppe zunächst mit homogener Ladung weiterbetrieben wird, der λ-Wert jedoch in Richtung eines fetteren Gemischs verändert wird, und einer oder alle der verbleibenden Zylinder temporär abgeschaltet werden,

7. Verfahren nach einem der Ansprüche 1 bis 6, **dadurch gekennzeichnet, daß** eine weitere plötzliche Änderung der Kraftstoffzufuhr derart vorgenommen wird, daß die temporär abgeschalteten Zylinder auf Schichtladung umgeschaltet werden.

8. Verfahren nach einem der Ansprüche 3 bis 7, **dadurch gekennzeichnet, daß** die Umschaltung auf Schichtladung für die zunächst mit homogener Ladung weiterbetriebenen und die temporär abgeschalteten Zylinder gleichzeitig erfolgt.

9. Verfahren nach einem der Ansprüche 4 bis 8, **dadurch gekennzeichnet, daß** die plötzliche Änderung der Kraftstoffzufuhr mit einer Veränderung der Luftzufuhr verbunden ist.

10. Verfahren nach einem der Ansprüche 4 bis 9, **dadurch gekennzeichnet, daß** die Luftzufuhrregelung durch eine Drosselklappe realisiert wird.
